# EUROPÄISCHE PATENTANMELDUNG

(11) **EP 1 187 014 A2**
(43) Veröffentlichungstag der Anmeldung: **13.03.2002**
(21) Anmeldenummer: 01114394.8
(22) Anmeldetag: 13.06.2001
(51) Int. Cl.: G06F 9/45, G06F 9/44

(54) **Verfahren zur Generierung eines Datenverarbeitungsprogramms**

(30) Priorität: 14.06.2000 DE 10029254
(71) Anmelder: SIEMENS AKTIENGESELLSCHAFT, 80333 München (DE)
(72) Erfinder: Göddemeier, Ulrich, 76137 Karlsruhe (DE); Jany, Bernhard, 90530 Wendelstein (DE); Prechtl, Manfred, 92507 Nabburg (DE); Rupprecht, Georg, 90409 Nürnberg (DE); Schulz, Dietmar, 90574 Rosstal (DE)

(57) **Zusammenfassung**

Zur Generierung eines Datenverarbeitungsprogramms (P) wird die Notwendigkeit der Neugenerierung einzelner Module (M1-M6) anhand des Vergleichs von Zeitstempeln ermittelt. Dabei werden zu jedem Modul (M1-M6) ein Modulzeitstempel (TM1-TM6) und ein Schnittstellenzeitstempel (TS1-TS6) gespeichert, die bei einer Änderung am Modul (M1-M6) bzw. an dessen Schnittstelle (S1-S6) aktualisiert werden. Ein Modul (M1-M6), das ein geändertes referenziertes Modul (M1-M6) verwendet, wird nur dann selbst neu generiert, wenn anhand des Schnittstellenzeitstempels (TS1-TS6) des referenzierten Moduls (M1-M6) erkennbar ist, dass sich dessen Schnittstelle (S1-S6) geändert hat.

## Beschreibung

Die Erfindung betrifft ein Verfahren zur Generierung eines Datenverarbeitungsprogramms.

Ein Datenverarbeitungsprogramm, insbesondere ein in einem für einen Mikroprozessor direkt ausführbaren Maschinencode vorliegendes Programm, wird üblicherweise unter Verwendung eines sogenannten Compilers sowie eines sogenannten Linkers generiert. Der Compiler übersetzt einen in einem Quellmodul gespeicherten Quellcode, d. h. die Formulierung eines Algorithmus' in einer Programmiersprache in einen Objektcode, der in einem Programmodul gespeichert wird. Das Datenverarbeitungsprogramm kann aus einer Vielzahl derartiger Programmodule zusammengesetzt werden. Dieses Zusammensetzen bewerkstelligt der Linker. Die Funktionen eines Compilers - bzw. analog die eines sogenannten Assemblers - sowie eines Linkers sind grundsätzlich bekannt.

Eines der Module enthält den Quellcode des Hauptprogramms und fungiert damit als Hauptmodul. Zu diesem Hauptmodul stehen die weiteren Module in hierarchischer Beziehung, indem entweder das Hauptmodul eines oder mehrere der weiteren Module verwendet oder eines dieser Module selbst ein oder mehrere weitere Module verwendet. Die Abhängigkeit wird häufig in Form einer baumartigen Struktur verdeutlicht.

Bei einem einfachen Verfahren zur Generierung eines Datenverarbeitungsprogramms oder Programms werden nacheinander sämtliche Quellmodule durch den Compiler übersetzt und nachfolgend die resultierenden Module durch den Linker zu einem Programm zusammengesetzt. Nachteilig bei diesem Verfahren ist jedoch, dass auch im Falle einer Änderung des Quellcodes in nur einem Quellmodul stets alle Quellmodule übersetzt werden müssen, was einen erheblichen Zeitaufwand bedeutet.

Um diesen Nachteil zu reduzieren, ist es möglich, dass nur diejenigen Quellmodule übersetzt werden, die seit der letzten Generierung des Programms geändert worden sind. Da jedes gängige Betriebssystem für jede Datei den Zeitpunkt (Datum, Uhrzeit) der letzten Speicherung protokolliert und jedes Modul, ebenso wie das zugehörige Quellmodul, in Form einer Datei vorliegt, kann diese Information als Zeitstempel genutzt werden. Nachteilig dabei ist jedoch, dass nicht nur das geänderte Modul, sondern auch jedes Modul, welches das geänderte Modul verwendet, neu übersetzt werden muß. Dabei müssen um so mehr Module neu übersetzt werden, je tiefer oder nachrangiger das geänderte Modul in der baumartigen Hierarchie angeordnet ist.

Der Erfindung liegt daher die Aufgabe zugrunde, ein besonders geeignetes Verfahren zur Generierung eines Datenverarbeitungsprogramms anzugeben, bei dem die Anzahl neu zu generierender Module - und damit die zur Generierung des Datenverarbeitungsprogramms erforderliche Zeit - möglichst gering ist.

Diese Aufgabe wird erfindungsgemäß gelöst durch die Merkmale des Anspruchs 1. Vorteilhafte Weiterbildungen sind Gegenstand der Unteransprüche.

Die Generierung eines Datenverarbeitungsprogramms erfolgt aus einer Mehrzahl von jeweils aus einem Quellmodul generierbaren und eine Schnittstelle aufweisenden Modulen. Zu jedem Quellmodul wird ein Quellmodulzeitstempel und zu jedem Modul ein Modulzeitstempel sowie zu jeder Schnittstelle ein Schnittstellenzeitstempel gespeichert, der jeweils den Zeitpunkt der letzten Änderung des Quellmoduls und des Moduls bzw. der Schnittstelle angibt.

Dabei wird ein Modul, dessen Modulzeitstempel ungleich dem Quellmodulzeitstempel des zugehörigen Quellmoduls ist, aus diesem unter Aktualisierung des Modulzeitstempels und ggf. des Schnittstellenzeitstempels neu generiert. Des Weiteren wird ein ein referenziertes Modul verwendendes Modul neu generiert, wenn ein bei dessen vorangehender Generierung zwischengespeicherter Wert des Schnittstellenzeitstempels des referenzierten Moduls ungleich dem aktuellen Schnittstellenzeitstempel des referenzierten Moduls ist. Das Datenverarbeitungsprogramm wird dann durch Kombination der Module gebildet.

Ein Modul wird einerseits dann neu generiert, z. B. compiliert, wenn es nicht existiert, etwa weil es gelöscht wurde, oder weil das Modul zuvor noch nie generiert worden ist, etwa weil das zugehörige Quellmodul neu angelegt wurde. Ein Modul wird aber andererseits auch dann neu generiert, wenn Änderungen am Quellmodul vorgenommen wurden, damit das Modul stets den aktuellen Stand des Quellmoduls repräsentiert. Dabei ist der Modulzeitstempel eines nicht oder nicht mehr existierenden Moduls nicht definiert und wird auf einen in einer programmierten Abfrage verwertbaren Wert, z. B. auf 0, normiert. Bei einem Vergleich dieses Wertes mit dem Quellmodulzeitstempel ergibt sich notwendig eine Ungleichheit. Das Modul wird neu generiert.

Bei einer Änderung an einem Quellmodul wird dessen Quellmodulzeitstempel aktualisiert. Der Modulzeitstempel des korrespondierenden Moduls wird jedoch nicht verändert. Ein Vergleich des (aktualisierten) Quellmodulzeitstempels mit dem Modulzeitstempel ergibt notwendig Ungleichheit. Das Modul wird neu generiert. Für das neu generierte Modul wird dessen Modulzeitstempel aktualisiert. Der Schnittstellenzeitstempel wird nur dann aktualisiert, wenn sich die Änderungen am Quellmodul auf die Schnittstelle des Moduls auswirken.

Ein Modul, dass ein referenziertes Modul verwendet, kann durch Änderungen an dem verwendeten Modul beeinflußt werden. Dabei ist ein referenziertes Modul ein zur Verwendung vorgesehenes oder ausgewähltes Modul. Daher ist ein ein referenziertes Modul verwendendes Modul unter bestimmten Umständen selbst dann neu zu generieren, wenn am Modul selbst keine Änderungen vorgenommen wurden.

Wenn ein Modul, das zumindest ein anderes Modul verwendet, bereits einmal generiert wurde, ist bekannt, welches Modul verwendet wird oder welche Module verwendet werden. Der Schnittstellenzeitstempel jedes verwendeten Moduls wird zwischengespeichert. Wenn der zwischengespeicherte Wert ungleich dem aktuellen Schnittstellenzeitstempel des referenzierten Moduls ist, steht fest, daß seit der letzten Generierung des Moduls eine Änderung der Schnittstelle des referenzierten Moduls stattgefunden hat. Das Modul wird neu generiert. Durch Kombination, z. B. durch Linken, der Module wird das Datenverarbeitungsprogramm gebildet.

Ein wesentlicher Vorteil dieses Verfahrens ist, dass ein Modul nur dann neu generiert wird, wenn bei einem referenzierten Modul, von dem es aufgrund der Verwendungs-Beziehung abhängig ist, eine Änderung an der Schnittstelle stattgefunden hat. So muß bei einer Änderung in einem Quellmodul, die sich nicht auf die Schnittstelle des korrespondierenden Moduls auswirkt, nur das korrespondierende Modul selbst anhand des geänderten Quellmoduls neu generiert werden. Eine Neugenerierung des Moduls, welches das geänderte Modul verwendet, ist nicht erforderlich. Eine Änderung an einem Modul, das hierarchisch auf einer unteren Ebene angeordnet ist, erfordert solange keine Neugenerierung sämtlicher verwendeter Module, solange sich die Änderung nicht auf die Schnittstelle eines verwendeten Moduls bezieht. Ein Modul ist hierarchisch auf einer unteren Ebene angeordnet, wenn es von einem anderen Modul verwendet wird. Verschiedene Hierarchieebenen ergeben sich entsprechend der "Tiefe" der Verwendungs-Beziehungen, wenn etwa ein Modul nicht direkt sondern indirekt über ein weiteres Modul verwendet wird.

Da eine Änderung an einer Schnittstelle immer einen Eingriff in die Grundstruktur des Datenverarbeitungsprogramms darstellt, sind Änderungen der Schnittstelle nicht so häufig, wie Änderungen am Quellcode oder an einem bestimmten Datum. Es ergibt sich also der angestrebte Zeitgewinn, da bei einer sich nicht auf die Schnittstelle beziehenden Änderung an einem Quellmodul grundsätzlich nur das korrespondierende Modul neu übersetzt werden muß. Das Datenverarbeitungsprogramm kann durch Kombinieren des neu generierten Moduls mit den bereits aus einem vorangehenden Generierungslauf zur Verfügung stehenden Modulen gebildet werden.

Wenn der Wert des Schnittstellenzeitstempels des referenzierten Moduls zweckmäßigerweise in einer Abhängigkeitsliste zwischengespeichert wird, geht dessen Wert zum Zeitpunkt der letzten Generierung des verwendeten Moduls auch dann nicht verloren, wenn das referenzierte Modul neu generiert wird und dessen Schnittstellenzeitstempel aktualisiert wird. Ist dabei für jedes Modul, welches mindestens ein referenziertes Modul verwendet, eine eigene Abhängigkeitsliste vorgesehen, so ergibt sich eine besonders einfache Zuordnung zwischen dem verwendenden Modul und der jeweiligen Abhängigkeitsliste.

Die Zuordnung zwischen Modul und Abhängigkeitsliste ist nochmals vereinfacht, wenn die Abhängigkeitsliste Bestandteil des Moduls ist. Grund hierfür ist, dass dann keine globale Struktur zur Speicherung einer Abhängigkeitsliste für alle Module im Hauptspeicher vorzusehen ist, sondern mit jedem zu generierenden Modul genau dessen Abhängigkeitsliste vorliegt. Dabei ist die Auswertung der Abhängigkeitsliste dann besonders einfach, wenn diese eine der Anzahl der referenzierten Module entsprechende Anzahl von Positionen aufweist und jede Position genau einem referenzierten Modul zugeordnet ist. Zur Überprüfung, ob die Schnittstelle eines bestimmten zu verwendenden Moduls geändert wurde, kann daher direkt die zugehörige Position der Abhängigkeitsliste ausgelesen werden.

Wenn nach dem Generieren des Moduls in jede Position der Abhängigkeitsliste der Wert des Schnittstellenzeitstempels des jeweils referenzierten Moduls eingetragen wird, liegen im Falle einer unmittelbaren erneuten Generierung des selben Moduls die aktuellen Schnittstellenzeitstempel bereits vor. Es kann dann bereits entschieden werden, dass bei der erneuten Generierung das Modul nicht nochmals geschrieben werden muß. Ferner können die Daten der Abhängigkeitsliste zur Ansicht durch den Benutzer aufbereitet werden, der damit nicht nur über die bestehenden Verwendungs-Beziehungen, sondern auch über die Version der verwendeten Module Auskunft erlangt.

Eine Realisierung der Abhängigkeitsliste als statisches Feld ist in einem entsprechenden Programm besonders leicht umzusetzen. Die Position bestimmter Daten in der Abhängigkeitsliste läßt sich besonders leicht ermitteln, so daß ein lesender oder schreibender Zugriff unkompliziert ist.

Eine Realisierung der Abhängigkeitsliste als sogenannte verkettete Liste ist hinsichtlich des erforderlichen Speicherplatzes besonders effektiv. Ein statisches Feld belegt unabhängig von der Anzahl der benötigten Positionen, d.h. der darin gespeicherten Daten, eine bestimmte Menge Speicherplatz. Dagegen ist der Speicherplatzbedarf einer von einer verketteten Liste darstellten dynamischen Struktur stets direkt proportional zur Menge der darin gespeicherten Daten.

Wenn nach dem Generieren eines Moduls dessen Schnittstellenzeitstempel in eine Abhängigkeitsmatrix eingetragen wird, kann der Schnittstellenzeitstempel gelesen werden, ohne dass das Modul geöffnet werden muß. Ein Modul liegt in Form einer Datei vor und das Öffnen einer solchen Datei erfordert Zeit. Der Zeitaufwand ist deswegen nicht vernachlässigbar, weil die Position der Datei auf einem Speicher, wie z. B. auf einer Festplatte oder einer Diskette, anhand des Dateisystems ermittelt werden muß. Ist die Datei gefunden, muß diese zum Lesen geöffnet und daraufhin die Position des Schnittstellenzeitstempels in der Datei ermittelt werden. Die Abhängigkeitsmatrix ermöglicht damit eine von den jeweiligen Modulen unabhängige Speicherung der Schnittstellenzeitstempel.

Der Zugriff auf die in der Abhängigkeitsmatrix gespeicherten Schnittstellenzeitstempel ist dann besonders einfach möglich, wenn diese Matrix eine der Anzahl der Module entsprechende Anzahl von Spalten und Zeilen aufweist, und wenn jedem Modul genau eine Spalte und genau eine Zeile zugeordnet ist. Die Anzahl der Module ist grundsätzlich nur dann im Voraus bekannt, wenn die Anzahl der für das Datenverarbeitungsprogramm insgesamt benötigten Module angesetzt wird. Die Abhängigkeitsmatrix ist dann analog als statisches Feld realisierbar. Denkbar ist auch eine Obergrenze für die Anzahl der verwendbaren Module. Auch mit dieser Obergrenze läge die Dimension der Abhängigkeitsmatrix fest. Günstig ist jedoch, wenn die Abhängigkeitsmatrix analog als dynamische Struktur realisiert ist und eine zusätzliche Spalte und Zeile in die Abhängigkeitsmatrix eingefügt wird, wenn ein bisher noch nicht berücksichtigtes Modul bearbeitet wird.

Die Daten der Abhängigkeitsmatrix sind besonders leicht auswertbar, wenn jeweils eine Zeile die Verwendungs-Beziehungen eines zu generierenden Moduls angibt. Dies ist dann der Fall, wenn an der Position, welche mit der dem referenzierten Modul zugeordneten Spalte festgelegt ist, der Wert des Schnittstellenzeitstempels des jeweils referenzierten Moduls eingetragen wird. Ferner können die Daten der Abhängigkeitsmatrix zur Ansicht durch den Benutzer aufbereitet werden, der damit nicht nur über die bestehenden Verwendungs-Beziehungen, insbesondere zwischen allen beteiligten Modulen, sondern auch über die Version der verwendeten Module Auskunft erlangt.

Die Abhängigkeitsmatrix enthält Informationen vergleichbar mit einem manuell zu generierenden sogenannten "make-file". Da die Abhängigkeitsmatrix nicht manuell generiert werden muß, stellt sie vorteilhaft auch noch ein automatisch generiertes make-file dar.

Die Abhängigkeitsmatrix kann zusammen mit dem resultierenden Datenverarbeitungsprogramm - ggf. in einer separaten Datei - gespeichert werden. Im Falle von später erforderlich werdenden Änderungen am Programm stehen damit unmittelbar wieder die Abhängigkeitsverhältnisse und damit die Verwendungs-Beziehungen zwischen den beteiligten Modulen zur Verfügung. Dies ist besonders dann vorteilhaft, wenn das Datenverarbeitungsprogramm auf einer ersten Hardware generiert wird und auf einer zweiten Hardware zur Ausführung kommt. Man spricht dann von einer sogenannten Plattform-übergreifenden Entwicklung (Cross-Platform-Development).

Die erste Hardware/Plattform ist z.B. ein herkömmlicher PC und die zweite Hardware/Plattform ist eine sogenannte speicherprogrammierbare Steuerung in welcher das Datenverarbeitungsprogramm zur Steuerung eines technischen Prozesses ausgeführt wird. Wenn die Abhängigkeitsmatrix zusammen mit dem Datenverarbeitungsprogramm auf die Zielhardware, d. h. auf die speicherprogrammierbare Steuerung geladen wird, steht sie auch bei später erforderlich werdenden Änderungen am Datenverarbeitungsprogramm einem Programmierer zur Verfügung, der die Module aus der Steuerung auf den PC transferiert.

Als aktueller Schnittstellenzeitstempel eines referenzierten Moduls ist der in der Abhängigkeitsmatrix eingetragene Wert verwendbar. Auf diesen kann dann besonders leicht zugegriffen werden, wenn er in der Zeile des zu generierenden Moduls und der Spalte des referenzierten Moduls gespeichert ist.

Nach dem Generieren eines Moduls kann auch zusammen mit dem Modul dessen Schnittstellenzeitstempel gespeichert werden, so dass dann keine Abhängigkeitsmatrix erforderlich ist. Dieser Schnittstellenzeitstempel wird als aktueller Schnittstellenzeitstempel verwendet, um zu ermitteln, ob im Falle einer Verwendung eine Neugenerierung des verwendenden Moduls erforderlich ist. Zu diesem Zweck wäre der Schnittstellenzeitstempel entsprechend aus dem referenzierten Modul auszulesen.

Ein weiterer Vorteil besteht darin, daß das Verfahren nicht auf die Generierung eines Datenverarbeitungsprogramms aus einer Mehrzahl von Modulen beschränkt ist. Das Verfahren ist auch zur Generierung eines einzelnen Moduls, das mindestens ein referenziertes Modul verwendet, anwendbar. Das resultierende Modul ist dann ggf. zur Generierung eines Datenverarbeitungsprogramms verwendbar. Dies ist deswegen von Vorteil, weil nicht mehr nur Datenverarbeitungsprogramme kommerziell vertrieben werden. Häufig werden auch einzelne Module angeboten, die bestimmte Funktionen zur Verfügung stellen, die für ein Datenverarbeitungsprogramm genutzt werden sollen. Auch das Verfahren zur Generierung eines Moduls kann - ebenso wie das Verfahren zur Generierung eines Datenverarbeitungsprogramms - durch die in den Unteransprüchen angegebenen Merkmale vorteilhaft weitergebildet werden.

Ein Zeitstempel, z.B. ein Modul-, Quellmodul- oder Schnittstellenzeitstempel, muß nicht notwendigerweise unmittelbar oder in codierter Form ein Datum und eine Uhrzeit enthalten. Ein Zeitstempel liegt z.B. auch dann vor, wenn zu einem Quellmodul ein eindeutiger Schlüssel, z.B. eine CRC-Signatur gebildet wird. Wird diese CRC-Signatur bei der Generierung eines Moduls gespeichert, kann durch Vergleich der gespeicherten CRC-Signatur mit der Signatur des Quellmoduls die Aktualität des Moduls erkannt werden.

Ein "Zeitstempel" in Form einer CRC-Signatur codiert keinen Zeitwert im eigentlichen Sinne, sondern einen Wert, der eindeutig zu einer zu einem bestimmten Zeitpunkt vorliegenden Version eines Quellmoduls gehört. Wird das Quellmodul später geändert, ergibt sich aufgrund der Änderungen eine andere CRC-Signatur. Der Wert einer CRC-Signatur ist nur vom Inhalt der codierten Datenmenge, d.h. vom Inhalt z.B. des Quellmoduls abhängig. Daher wird der Wert einer CRC-Signatur nicht um so größer, je öfter ein Modul geändert wird. Ein Zeitstempel, der in einer größer-/kleiner-Beziehung auswertbar ist, ist aber z.B. ein als Zeitstempel verwendeter Zähler, der bei jeder Generierung eines Moduls oder des Datenverarbeitungsprogramms inkrementiert wird. Dies ist besonders dann leicht realisierbar, wenn das Programm, mit dem die Module bzw. das Datenverarbeitungsprogramm generiert werden, auch das Erstellen der Quellmodule ermöglicht. Mit anderen Worten: Bei jedem Verfahren zur Generierung eines Datenverarbeitungsprogramms oder eines Moduls, bei dem erkannt wird, ob ein Modul noch aktuell ist oder ob ein Modul oder dessen Schnittstelle bereits berücksichtigt wurde, müssen Zeitstempel der oben beschriebenen Art ausgewertet werden.

Nachfolgend werden Ausführungsbeispiele der Erfindung anhand einer Zeichnung näher erläutert. Darin zeigen:
- FIG 1: schematisch die Generierung eines Datenverarbeitungsprogramms aus Modulen, die wiederum aus Quellmodulen generiert werden,
- FIG 2: einen Verwendungs-Graph, der die zwischen den Modulen des Datenverarbeitungsprogramms bestehenden Verwendungs-Beziehungen darstellt,
- FIG 3: eine andere Darstellung des Verwendungs-Graphen,
- FIG 4: die bekannte Verwendung von Zeitstempeln bei Quellmodulen und korrespondierenden Modulen eines Datenverarbeitungsprogramms,
- FIG 5: schematisch die Generierung eines Datenverarbeitungsprogramms unter Verwendung von einem Zeitstempel für ein Quellmodul und zwei Zeitstempeln für das korrespondierende Modul,
- FIG 6: ein Modul mit einer Schnittstelle,
- FIG 7: einen Computer mit dessen Speicherinhalt,
- FIG 8: eine Abhängigkeitsmatrix,
- FIG 9: ein Modul mit einer Abhängigkeitsliste, und
- FIG 10: ein Flußdiagramm zur Generierung eines Datenverarbeitungsprogramms.

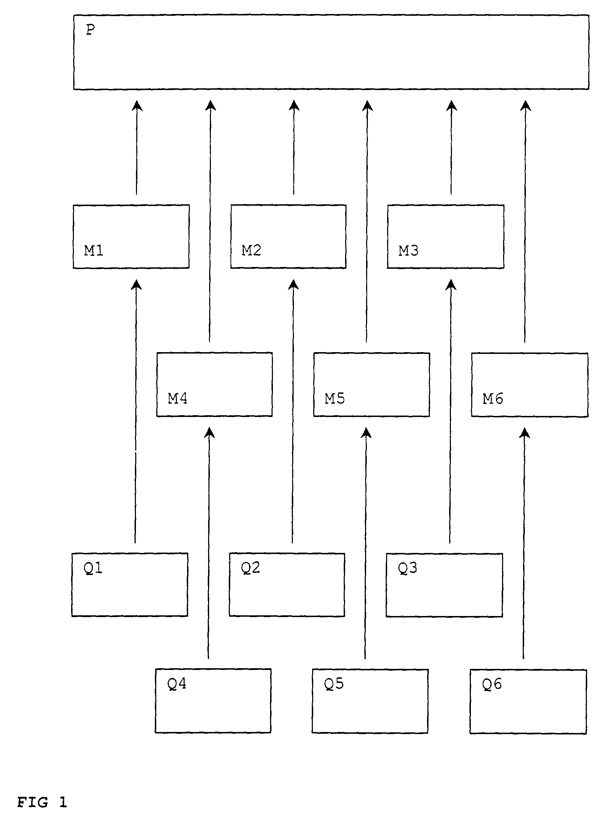

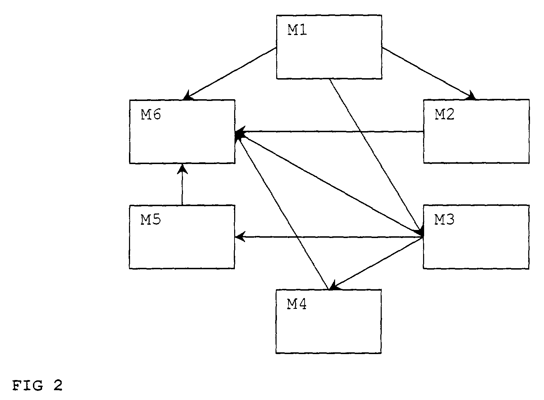

FIG 1 zeigt die Generierung eines Datenverarbeitungsprogramms oder Programms P aus Modulen M1 bis M6, die durch entsprechende Übersetzung ihrerseits aus Quellmodulen Q1 bis Q6 generiert werden. Die Pfeile deuten dabei die Richtung des Datenflusses an. FIG 2 zeigt einen so genannten Verwendungs-Graph für das aus den Modulen M1 bis M6 bestehende Datenverarbeitungsprogramm P.

Für die weitere Beschreibung wird angenommen, daß das mit M1 bezeichnete Modul als Hauptmodul M1 fungiert und das mit M6 bezeichnete Modul als Datenmodul M6 globale Variablendeklarationen enthält. Die mit M2 bis M5 bezeichneten Module sind Funktionsmodule, von denen z.B. das mit M2 bezeichnete Modul die Funktionen für einen Benutzerdialog, beispielsweise eine Ein-/Ausgabe an einem Bildschirm oder Drucker, bereitstellt. Das mit M3 bezeichnete Modul stellt z. B. Funktionen zur Steuerung eines (nicht dargestellten) technischen Prozesses, das mit M4 bezeichnete Modul Funktionen zur Digital-Ein-/Ausgabe und das mit M5 bezeichnete Modul Funktionen zur Analog-Ein-/Ausgabe von bzw. an den technischen Prozeß bereit.

Das Hauptmodul M1 verwendet direkt oder indirekt die Funktionsmodule M2 bis M5 sowie das Datenmodel M6. Nachdem die globalen Variablen des Datenmoduls M6 auch von den Funktionsmodulen M2 bis M5 benötigt werden, verwenden auch diese das Datenmodul M6. Die sich damit ergebenden Verwendungs-Beziehungen sind durch die jeweiligen Pfeile dargestellt, wobei der Pfeil immer vom verwendenden Modul (z.B. M1) auf das verwendete Modul (z.B. M2) gerichtet ist.

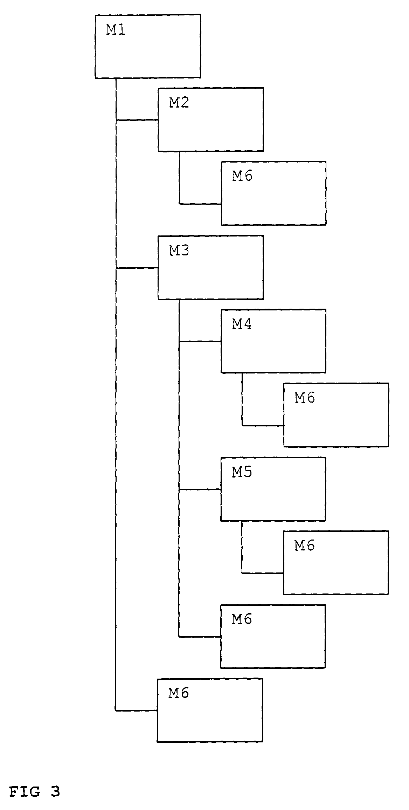

FIG 3 zeigt eine alternative Darstellung der Verwendungs-Beziehungen. Anhand dieser Darstellung wird die baumartige hierarchische Struktur der Module M1 bis M6 deutlich. Das auf der obersten Hierarchiestufe dargestellte Hauptmodul M1 verwendet die Funktionsmodule M2, M3 sowie das Datenmodul M6. Das Funktionsmodul M3 verwendet weitere Funktionsmodule M4, M5 und jedes der Funktionsmodule M2 bis M5 verwendet selbst das Datenmodul M6. Anhand dieser baumartigen Struktur wird deutlich, welche Module M1 bis M6 bei einer Änderung des zugehörigen Quellmoduls Q1 bis Q6 neu generiert werden müssen. Wird nur das dem Hauptmodul M1 zugehörige Quellmodul Q1 geändert, ist eine erneute Generierung des Hauptmoduls M1 ausreichend. Wird das dem Funktionsmodul M2 zugehörige Quellmodul Q2 geändert, so muß sowohl das Funktionsmodul M2 als auch das Hauptmodul M1, welches das Funktionsmodul M2 verwendet, neu generiert werden. Wird das dem Datenmodul M6 zugehörige Quellmodul Q6 geändert, so müssen zusätzlich zum Datenmodul M6 alle anderen Module M1 bis M5 neu generiert werden, da diese jeweils das Datenmodul M6 verwenden.

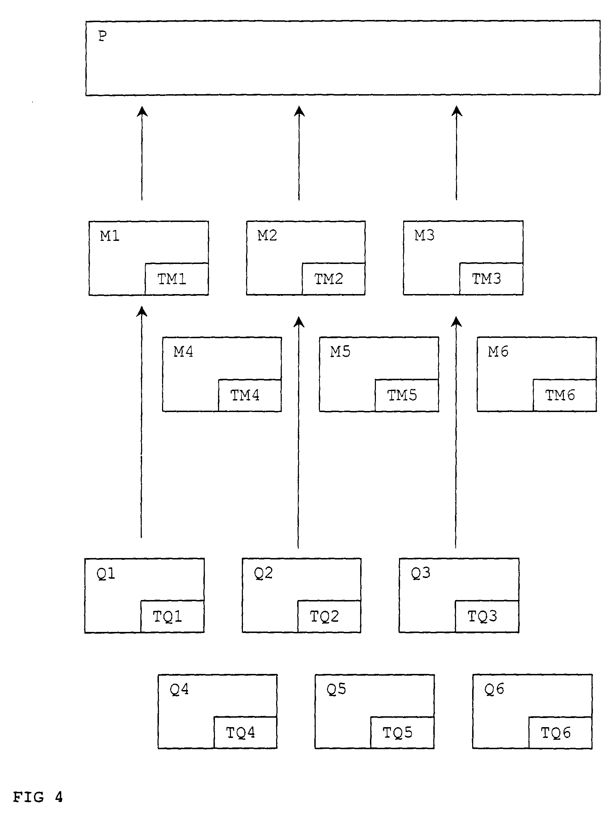

Anhand von FIG 4 erfolgt eine Erläuterung des bekannten Verfahrens, bei dem nur diejenigen Quellmodule Q1 bis Q6 übersetzt werden, die seit der letzten Generierung des Programms P geändert worden sind. Für jedes Quellmodul Q1 bis Q6 wird ein Quellmodulzeitstempel TQ1 bis TQ6 abgespeichert, der den Zeitpunkt der letzten Speicherung des jeweiligen Quellmoduls Q1 bis Q6 angibt. Analog wird für jedes Modul M1 bis M6 ein Modulzeitstempel TM1 bis TM6 abgespeichert, der den Zeitpunkt der Generierung des entsprechenden Moduls M1 bis M6 oder den Wert des Quellmodulzeitstempels TQ1 bis TQ6 zum Zeitpunkt der Generierung angibt. Wenn alle Module M1 bis M6 übersetzt wurden, ist der Zeitwert jedes Modulzeitstempels TM1 bis TM6 größer oder gleich dem Quellmodulzeitstempel TQ1 bis TQ6 der zugrundeliegenden Quellmodule Q1 bis Q6.

Wird z. B. das Quellmodul Q3 geändert (und abgespeichert), so wird dessen Quellmodulzeitstempel TQ3 aktualisiert. Dieser Quellmodulzeitstempel TQ3 ist nun größer als der Modulzeitstempel TM3 des korrespondierenden Moduls M3. Anhand dieser Relation ist erkennbar, dass eine erneute Generierung des Moduls M3 durch Übersetzung des (geänderten) Quellmoduls Q3 erforderlich ist. Nachdem das Modul M3 neu generiert wurde, muß das neue Modul M3 in das Programm P integriert werden. Dazu muß jedes Modul M1 bis M6, welches das Modul M3 verwendet, neu generiert werden.

Anhand des Verwendungs-Graphen (FIG 3) ist ersichtlich, dass nur das Modul M1 das Modul M3 verwendet. Es wird also nur zusätzlich das Modul M1 neu generiert und aus den neu generierten Modulen M1, M3 sowie den unveränderten Modulen M2, M4 bis M6 wird das Programm P generiert. Da nur zwei der Module neu generiert werden mußten, ergibt sich ein Zeitgewinn im Vergleich zum bekannten Verfahren, bei dem alle Module neu generiert worden wären. Anhand des Verwendungs-Graphen (FIG 3) ist auch ersichtlich, dass im Falle einer Neugenerierung des Moduls M6 bei dem bekannten Verfahren alle Module neu hätten generiert werden müssen.

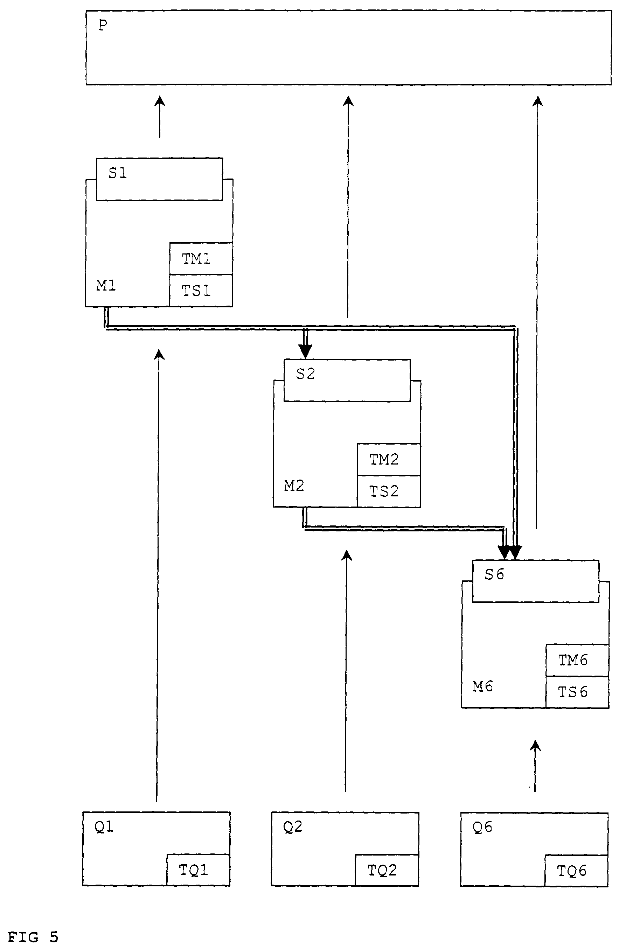

Anhand der weiteren Figuren wird nachfolgend das erfindungsgemäße Verfahren näher erläutert. Dabei zeigt FIG 5 eine zu FIG 4 analoge Darstellung, wobei aus Gründen der Übersichtlichkeit nur das Hauptmodul M1, eines der Funktionsmodule M2 und das Datenmodul M6, sowie die korrespondierenden Quellmodule Q1, Q2, Q6 dargestellt sind. Zusätzlich sind durch Doppelpfeile die zwischen den Modulen M1, M2, M6 bestehenden Verwendungs-Beziehungen verdeutlicht.

Das Hauptmodul M1 verwendet das Funktionsmodul M2 sowie das Datenmodul M6. Das Funktionsmodul M2 verwendet das Datenmodul M6. Zu jedem Modul M1, M2, M6 ist ein Modulzeitstempel TM1, TM2, TM6 und zu jedem Quellmodul Q1, Q2, Q6 ist ein Quellmodulzeitstempel TQ1, TQ2, TQ6 vorgesehen. Ferner ist zu jedem Modul M1, M2, M6 dessen Schnittstelle S1, S2, S6 dargestellt, für welche als Zeitstempel jeweils ein Schnittstellenzeitstempel TS1, TS2, TS6 vorgesehen ist. Für jedes Modul M1, M2, M6 ist also als erster Zeitstempel der Modulzeitstempel TM1, TM2, TM6 und als zweiter Zeitstempel der Schnittstellenzeitstempel TS1, TS2, TS6 vorgesehen.

Bei einer erforderlichen Neugenerierung eines Moduls M1, M2, M6 wird dessen Modulzeitstempel TM1, TM2, TM6 aktualisiert. Wenn die Neugenerierung sich auch auf die Schnittstelle S1, S2, S6 auswirkt, wird zusätzlich der Schnittstellenzeitstempel TS1, TS2, TS6 aktualisiert. Wirkt sich die Änderung dagegen nicht auf die Schnittstelle S1, S2, S6 aus, bleibt der Schnittstellenzeitstempel TS1, TS2, TS6 unverändert.

Die Doppelpfeile verdeutlichenden die Verwendungs-Beziehungen. Sie gehen von einem Modul M1, M2 aus und enden an der Schnittstelle S2, S6 desjenigen Moduls M2, M6, das verwendet wird. Grund hierfür ist, dass bei der Verwendung tatsächlich kein Code, der im "Innern" des Moduls gleichsam gekapselt ist, sondern nur die jeweilige Schnittstelle gelesen wird. Besonders bei der so genannten objektorientierten Programmierung wird zwischen sogenannten öffentlichen (public) und verborgenen, privaten (private) Bereichen eines Objektes unterschieden. Als Objekt kann dabei grundsätzlich jede Struktur, also z. B. auch ein Modul, aufgefaßt werden. Der öffentliche oder exportierte Bereich eines Moduls stellt dessen Schnittstelle dar; der Code befindet sich im privaten, gekapselten Bereich. Nur der exportierte Bereich ist einer Verwendung durch andere Module zugänglich.

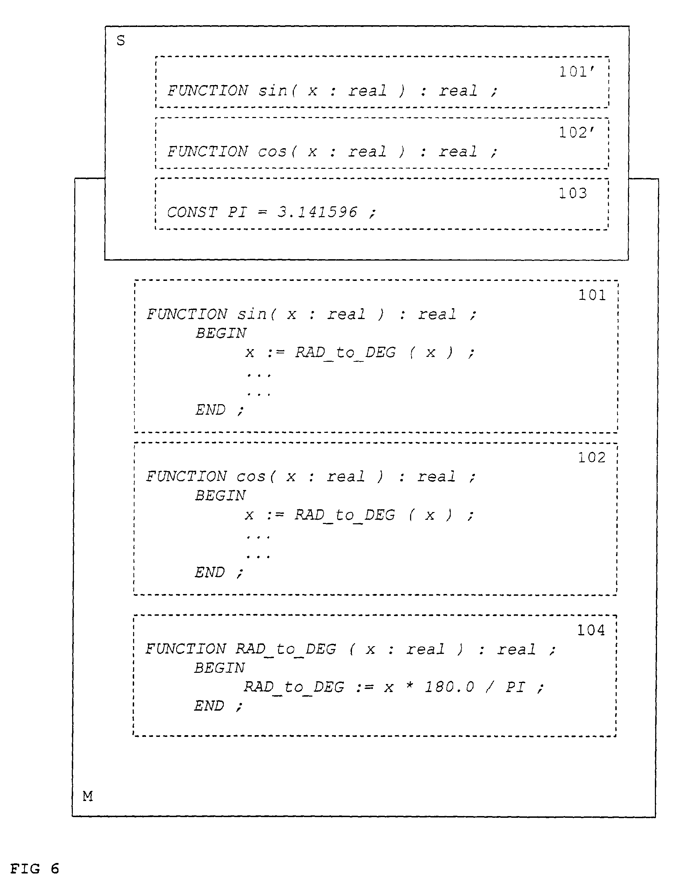

In FIG 6 ist zur Erläuterung der Tatsache, daß tatsächlich nur eine Verwendung der Schnittstelle S stattfindet, ein exemplarisches Modul M mit einer Schnittstelle S dargestellt. Mit dem Modul M sollen einfache trigonometrische Funktionen (Sinus, Cosinus) zur Verwendung in einem Datenverarbeitungsprogramm P zur Verfügung gestellt werden. Die Funktionen 101, 102, 104 befinden sich im privaten Bereich des Moduls M. Damit z.B. die Sinus-Funktion 101 außerhalb des Moduls M, also in einem anderen Modul, aufgerufen werden kann, muß bekannt sein, daß das Modul M die Sinus-Funktion 101 zur Verfügung stellt und wie diese Funktion 101 im Hinblick auf die erforderliche Typkonsistenz aufgerufen werden muß. Zu diesem Zweck ist der "Kopf" 101' der Sinus-Funktion in der Schnittstelle S vorgesehen. Jedem Modul, das die Schnittstelle S des Moduls M verwendet, ist somit bekannt, dass die Sinus-Funktion 101 von dem Modul M zur Verfügung gestellt wird und welches Layout die Sinus-Funktion 101 aufweist. Ganz analog verhält es sich mit der Cosinus-Funktion 102 und deren entsprechendem Kopf 102' in der Schnittstelle S.

Aus Gründen der Vollständigkeit ist mit einer Konstanten PI (103) in der Schnittstelle S dargestellt, daß die Schnittstelle S nicht ausschließlich Funktionsköpfen 101', 102' vorbehalten ist, sondern dass in der Schnittstelle S auch Variablen- oder Konstantendeklarationen 103 erfolgen können. Bei dem Datenmodul M6 kann im Extremfall der private Teil des Moduls M6 sogar leer sein, so dass das Modul M6 quasi auf seine Schnittstelle S6 - den exportierten Teil - reduziert ist.

Zu der Umrechnungs-Funktion 104 taucht in der Schnittstelle S kein korrespondierender Kopf auf. Die Umrechnungs-Funktion 104 wird damit nicht exportiert und ist von außerhalb des Moduls M nicht aufrufbar. Ein Aufruf der Umrechnungs-Funktion 104 erfolgt nur innerhalb des Moduls M, nämlich sowohl in der Sinus-Funktion 101 als auch in der Cosinus-Funktion 102. Die exportierten Elemente des Moduls M sind aber auch innerhalb des Moduls M verwendbar, wie die Verwendung der Konstanten PI (103) in der Umrechnungs-Funktion 104 zeigt.

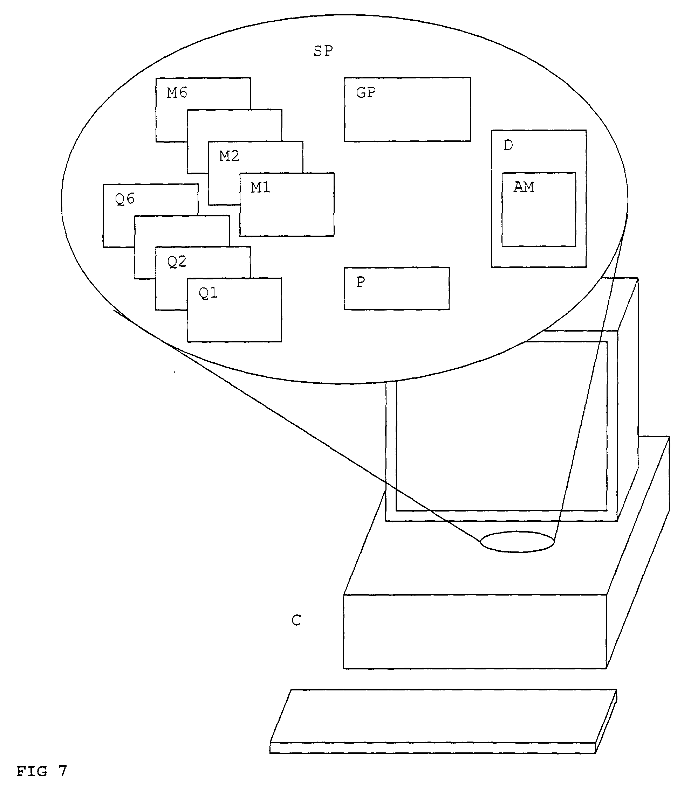

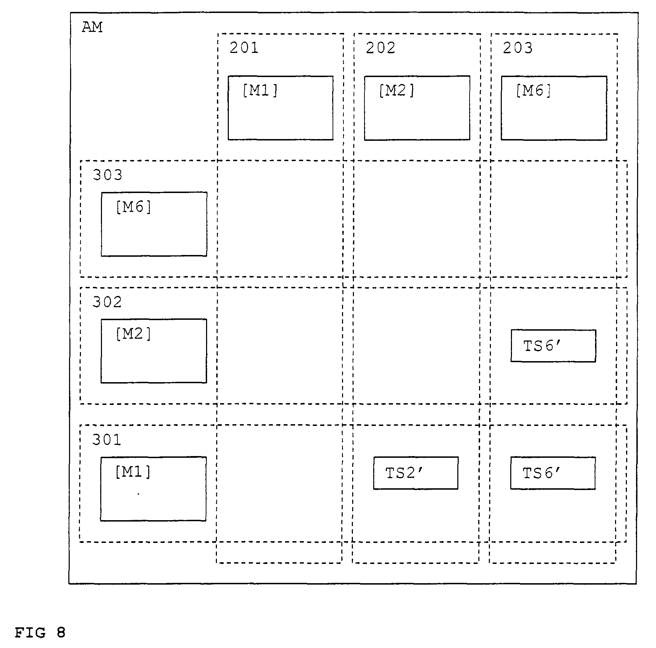

In FIG 7 ist dargestellt, dass die Quellmodule Q1, Q2, Q6 und die Module M1, M2, M6 in einem Speicher SP eines Computers C gespeichert sind. Der Speicher SP kann ein flüchtiger Speicher (Hauptspeicher) und/oder ein nichtflüchtiger Speicher (Diskette, Festplatte, etc.) sein. Gleichfalls in dem Speicher SP ist ein Generierungsprogramm GP gespeichert, das aus den Quellmodulen Q1, Q2, Q6 die Module M1, M2, M6 und aus diesen das Programm P generiert. Das Generierungsprogramm GP verfügt dazu sowohl über die Funktionalität eines Compilers als auch über die Funktionalität eines Linkers. Während der Generierung des Programms P greift es auf einen Datenspeicherbereich D zu. In dem Datenspeicherbereich D werden (nicht dargestellte) Zwischenergebnisse bei der Generierung eines Moduls M1, M2, M6 oder des Programms P gespeichert. Darüber hinaus ist in dem Datenspeicherbereich D eine Abhängigkeits- oder Änderungsmatrix AM abgespeichert, welche die Verwendungs-Beziehungen zwischen den Modulen M1, M2, M6 wiedergibt. Die Zeilen 201, 202, 203 und Spalten 301, 302, 303 umfassende Abhängigkeitsmatrix AM ist in FIG 8 dargestellt. Jede Zeile 201, 202, 203 und jede Spalte 301, 302, 303 repräsentiert ein Modul M1, M2, M6.

Um anzugeben, dass das Hauptmodul M1 das Funktionsmodul M2 verwendet, ist in der dem Hauptmodul M1 zugeordneten Zeile 301 in der Spalte 202 des verwendeten Funktionsmoduls M2 ein Datum TS2' eingetragen. Das Datum TS2'repräsentiert den Wert des Schnittstellenzeitstempels TS2 des verwendeten Funktionsmoduls M2.

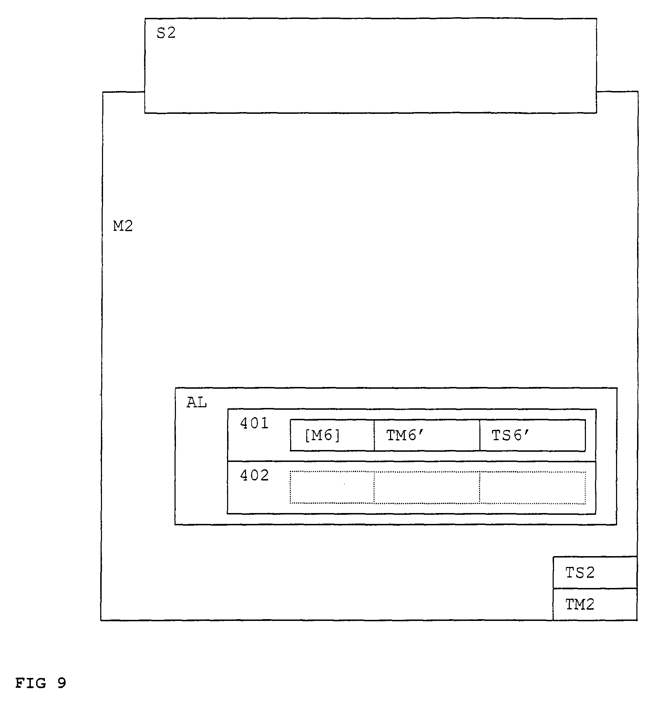

Sind in den Figuren, insbesondere in den Figuren 8 und 9, Bezugszeichen in eckigen Klammern ([, ]) angegeben, so bedeutet dies, das nicht das Element selbst, sondern eine Referenz des entsprechenden Elementes dargestellt ist. Beispielsweise ist in der Abhängigkeitsmatrix AM nicht das Funktionsmodul M2 selbst gespeichert, sondern die Abhängigkeitsmatrix AM umfaßt eine Spalte 202 und eine Zeile 302, denen jeweils das Funktionsmodul M2 zugeordnet ist. Diese Zuordnung stellt quasi eine "Spalten-" bzw. "Zeilenüberschrift" dar, die zur Auswertung der Abhängigkeitsmatrix AM und zur Zuordnung der entsprechenden Daten erforderlich sind.

FIG 9 zeigt das Funktionsmodul M2 mit einer Abhängigkeitsliste AL. Die Abhängigkeitsliste AL weist eine Anzahl von Positionen 401, 402 auf, in denen eingetragen ist, welches Modul das Funktionsmodul M2 verwendet (das Funktionsmodul M2 verwendet das Datenmodul M6). Für jede Verwendungs-Beziehung ist der Wert TM6' des Modulzeitstempels TM6 und der Wert TS6' des Schnittstellenzeitstempels TS6 des verwendeten Moduls M6 in der entsprechenden Position 401 der Abhängigkeitsliste AL gespeichert.

Die Abhängigkeitsliste AL kann eine der Anzahl der Module M1, M2, M6 entsprechende Anzahl von Positionen 401, 402 umfassen. Dann ist jede Position 401, 402 genau einem Modul M1, M2, M6 zugeordnet, so dass sich die Abhängigkeitsliste AL als statische Variable realisieren läßt. Die Abhängigkeitsliste AL kann auch als dynamische Variable, z.B. als verkettete Liste, realisiert werden, wobei die Abhängigkeitsliste AL dann genau so viele Positionen 401, 402 umfaßt, wie Verwendungs-Beziehungen bestehen. Diese Realisierung ist im Hinblick auf den Speicherplatzbedarf effizient.

Aus der Abhängigkeitsliste AL kann die Abhängigkeitsmatrix AM gebildet werden. Die Daten der Abhängigkeitsliste AL eines bestimmten Moduls M1, M2, M6 entsprechen im wesentlichen den Daten der jeweiligen Zeile 301, 302, 303 der Abhängigkeitsmatrix AM. Die Werte der Modulzeitstempel TM2', TM6' werden nicht in die Abhängigkeitsmatrix AM übertragen. Damit entsprechen die Daten der Abhängigkeitsliste AL des Funktionsmoduls M2 den Daten der Zeile 302 der Abhängigkeitsmatrix AM.

Die Generierung einzelner Module M1, M2, M6 aus dem jeweils zugehörigen Quellmodul Q1, Q2, Q6 sowie die Generierung des Programms P aus den Modulen M1, M2, M6 wird nachfolgend anhand von FIG 5 und 8 in Verbindung mit FIG 9 beschrieben. Bei der Generierung eines Moduls M1, M2, M6, das selbst keine weiteren Module verwendet bzw. importiert, z.B. des Datenmoduls M6, werden durch das Generierungsprogramm GP zumindest die nachfolgenden Schritte ausgeführt:
- Das Datenmodul M6 wird aus dem zugehörigen Quellmodul Q6 generiert. Der Modulzeitstempel TM6 wird im Datenmodul M6 aktualisiert.
- Hat sich bei der Neugenerierung des Datenmoduls M6 eine Änderung der zugehörigen Schnittstelle S6 ergeben, werden zusätzlich der Schnittstellenzeitstempel TS6 im Datenmodul M6 und der Wert des Schnittstellenzeitstempels TS6' in der Änderungsmatrix AM aktualisiert. Ansonsten wird der vorhergehende Schnittstellenzeitstempel TS6 beibehalten.
   Allgemein werden bei der Neugenerierung eines Moduls im Modul selbst der Modulzeitstempel und ggf. der Schnittstellenzeitstempel aktualisiert. Die Aktualisierung des Schnittstellenzeitstempels erfolgt erforderlichenfalls auch in der Abhängigkeitsmatrix AM.
- Das generierte Modul M6 wird zusammen mit den Zeitstempeln TM6, TS6 im Speicher SP (FIG 7) gespeichert.

Bei der Generierung eines Moduls M1, M2, M6, das selbst weitere Module M2, M6 verwendet, z.B. des Funktionsmoduls M2, wird durch das Generierungsprogramm GP zumindest ermittelt, welche Module M1, M2, M6 durch das Funktionsmodul M2 verwendet werden. Das Funktionsmodul M2 verwendet das Datenmodul M6.

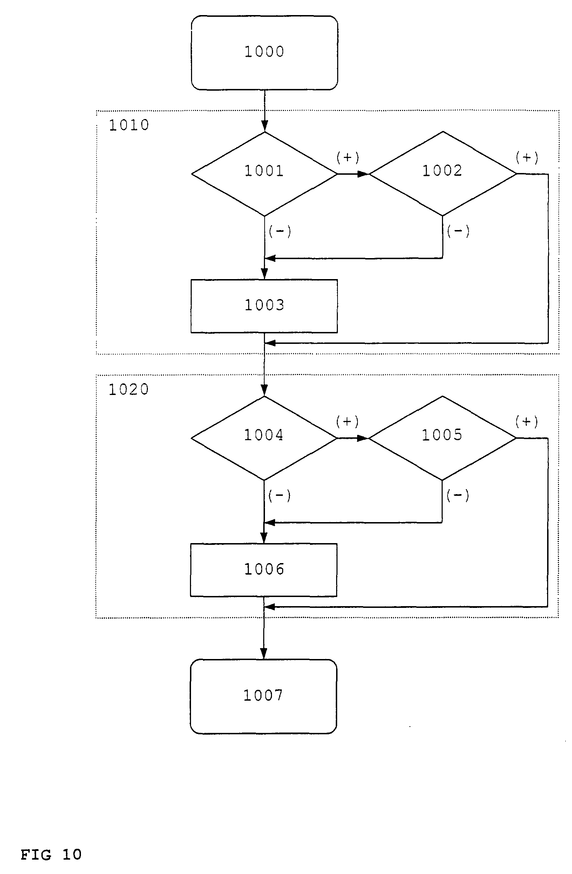

FIG 10 zeigt in einem Flußdiagramm einen Verwendungs-Algorithmus 1000 zur Verwendung eines referenzierten Moduls. Zur Verwendung des Datenmoduls M6 werden die folgenden Schritte des Verwendungs-Algorithmus 1000 ausgeführt:
1001 ( "Existiert das zu verwendende Modul?" ):
   Es wird ermittelt, ob das Datenmodul M6 existiert. Dies erfolgt, indem versucht wird, den Modulzeitstempel TM6 des Datenmoduls M6 auszulesen. Existiert das Datenmodul M6 nicht, wird der Modulzeitstempel TM6 auf einen eindeutigen numerischen Wert, z.B. 0, normiert.
   Ist dagegen der ermittelte Modulzeitstempel ungleich Null, d.h. das Datenmodul M6 existiert, ist die Bedingung 1001 erfüllt (+) und der Algorithmus wird im Schritt 1002 fortgesetzt.
   Ist der ermittelte Modulzeitstempel gleich Null (das Datenmodul M6 existiert nicht), ist die Bedingung 1001 nicht erfüllt (-) und der Algorithmus wird im Schritt 1003 fortgesetzt.
1003 ( "Neu generieren des zu verwendenden Moduls" ):
   Die Position 1003 wird - ausgehend von der Position 1001 - erreicht, wenn kein Datenmodul M6 existiert. Diese Position 1003 wird - ausgehend von der Position 1002 - auch erreicht, wenn das Datenmodul M6 nicht mehr aktuell ist. Somit wird ein Datenmodul M6 generiert, wobei dessen Modulzeitstempel TM6 und ggf. dessen Schnittstellenzeitstempel TS6 aktualisiert werden. Wird der Schnittstellenzeitstempel TS6 aktualisiert, wird der entsprechende Wert TS6' auch in der Abhängigkeitsmatrix AM aktualisiert. Der Algorithmus wird an der Position 1004 fortgesetzt.
1004 ( "Ist die Schnittstelle des zu verwendenden Moduls bekannt?" ):
   Nachdem jetzt das zu verwendende Datenmodul M6 zur Verfügung steht, ist zu ermitteln, ob aufgrund des neuen oder geänderten Datenmoduls M6 auch das Funktionsmodul M2 neu generiert werden muß. Dies ist dann der Fall, wenn sich die Schnittstelle S6 des Datenmoduls M6 geändert hat und noch nicht berücksichtigt wurde. Dies läßt sich ermitteln, indem der Wert des Schnittstellenzeitstempels TS6' der Abhängigkeitsliste AL des Funktionsmoduls M2 mit dem entsprechenden Datum TS6' der Abhängigkeitsmatrix AM (Position: Spalte 203, Zeile 302) verglichen wird.
   Die Abhängigkeitsliste AL eines jeden Moduls wird aktualisiert (Schritt 1006), nachdem das Modul neu generiert wurde. Wenn das Modul noch nicht neu generiert ist, sind in der Abhängigkeitsliste AL noch die Daten aus der vorangehenden Generierung eingetragen.
   Zu dem Zeitpunkt, zu dem Schritt 1004 ausgeführt wird, entspricht der Wert des Schnittstellenzeitstempels TS6' der Abhängigkeitsliste AL dem Zeitstempel TS6 der Schnittstelle S6 derjenigen Version des Datenmoduls M6, mit dem das Funktionsmodul M2 zuletzt vollständig generiert wurde. Bei einer Änderung der Schnittstelle S6 des Datenmoduls M6, wird aber (siehe oben) der entsprechende Wert ZS6' des Schnittstellenzeitstempels in der Abhängigkeitsmatrix AM aktualisiert. Folglich ergibt sich eine Ungleichheit zwischen dem Wert des Schnittstellenzeitstempels TS6' der Abhängigkeitsliste AL und dem Wert des Schnittstellenzeitstempels TS6' der Abhängigkeitsmatrix AM.
   Sind die Werte der Zeitstempel identisch (die geänderte Schnittstelle S6 ist bereits berücksichtigt worden), so ist die Bedingung 1004 erfüllt (+) und der Algorithmus wird im Schritt 1005 fortgesetzt.
   Liegt dagegen eine Ungleichheit vor (die geänderte Schnittstelle S6 des Datenmoduls M6 ist noch nicht berücksichtigt worden), so ist die Bedingung 1004 nicht erfüllt (-) und der Algorithmus wird im Schritt 1006 fortgesetzt.
1006 ("Generieren des Moduls" ):
   Die geänderte Schnittstelle S6 des Datenmoduls M6 erfordert eine Neugenerierung des Funktionsmoduls M2. Im Anschluß an die Neugenerierung wird die Abhängigkeitsliste AL des Funktionsmoduls M2 aktualisiert.
   Der Algorithmus wird im Schritt 1007 abgeschlossen.

Offen geblieben sind jetzt noch die Verzweigungen des Algorithmus' 1000. Im Schritt 1001 wurde geprüft, ob das zu verwendende Datenmodul M6 existiert. Die obige Beschreibung bezog sich auf ein noch nicht existierendes Datenmodul M6. Wenn das Datenmodul M6 dagegen bei der Neugenerierung des Funktionsmoduls M2 existiert, verzweigt der Algorithmus 1000 zum Schritt 1002.
1002 ( "Zu verwendendes Modul noch aktuell?" ):
   Wenn das zu verwendende Datenmodul M6 bereits existiert, ist zu ermitteln, ob es noch aktuell ist. Ein Modul ist aktuell, wenn dessen Modulzeitstempel identisch mit dem Quellmodulzeitstempel ist. Entsprechend wird der Modulzeitstempel TM6 des gefundenen Datenmoduls M6 mit dem Quellmodulzeitstempel TQ6 des zugehörigen Quellmoduls Q6 verglichen.
   Sind die verglichenen Zeitstempel TM6, TQ6 identisch (das Datenmodul M6 ist aktuell), ist die Bedingung 1002 erfüllt (+) und der Algorithmus wird im Schritt 1004 fortgesetzt. Das Neugenerieren des als bereits aktuell erkannten Datenmoduls M6 wird übersprungen.
   Sind dagegen die verglichenen Zeitstempel TM6, TQ6 ungleich (das Datenmodul M6 ist nicht aktuell), ist die Bedingung 1002 nicht erfüllt (-). Der Algorithmus wird im Schritt 1003 fortgesetzt und das Datenmodul M6 wird neu generiert (siehe oben).

Im Schritt 1004 wurde geprüft, ob die Schnittstelle des zu verwendenden Moduls bekannt ist. Die obige Beschreibung bezog sich auf eine aufgrund einer Änderung des Datenmoduls M6 noch nicht bekannte Datenmodulschnittstelle S6, so daß das Funktionsmodul M2 neu zu generieren war (Schritt 1006). Wenn die Datenmodulschnittstelle S6 dagegen bekannt ist, verzweigt der Algorithmus 1000 zum Schritt 1005.
1005 ( "Zu generierendes Modul bereits aktuell?" ):
   Wenn festgestellt wird, das die Schnittstelle S6 des zu verwendenden Datenmoduls M6 bereits bekannt ist, ist eine Generierung des Funktionsmoduls M2 dann unnötig, wenn es bereits aktuell ist. Ein Modul ist aktuell (Schritt 1002), wenn sein Modulzeitstempel mit dem Quellmodulzeitstempel übereinstimmt. Entsprechend wird der Modulzeitstempel TM2 des Funktionsmoduls M2 mit dem Quellmodulzeitstempel TQ2 des zugehörigen Quellmoduls Q2 verglichen.
   Sind die verglichenen Zeitstempel TM2, TQ2 identisch (das Funktionsmodul M2 ist bereits aktuell), ist die Bedingung 1005 erfüllt (+) und der Algorithmus wird mit dem Schritt 1007 beendet. Das Neugenerieren des als bereits aktuell erkannten Funktionsmoduls M2 wird übersprungen.
   Sind dagegen die verglichenen Zeitstempel TM6, TQ6 ungleich (das Funktionsmodul M2 existiert nicht oder ist nicht mehr aktuell), ist die Bedingung 1005 nicht erfüllt (-). Der Algorithmus wird im Schritt 1006 fortgesetzt und das Funktionsmodul M2 wird neu generiert.

Ist mehr als ein Modul zu verwenden, beispielsweise im Falle des Hauptmoduls M1 zumindest das Funktionsmodul M2 und das Datenmodul M6, wird der Abschnitt 1010 des Algorithmus' entsprechend mehrfach durchlaufen. Der Durchlauf des Abschnittes 1010 ist beendet, wenn sämtliche zu verwendende Module entweder (Schritte 1001, 1002) als existierend und aktuell erkannt wurden oder neu generiert (Schritt 1003) wurden.

Im Abschnitt 1020 wird im Falle mehrerer zu verwendender Module geprüft, ob die Schnittstelle des jeweils zu verwendenden Moduls bekannt (Schritt 1004) und ob das zu generierende Modul selbst bereits aktuell (Schritt 1005) ist. Ist nur eine der Schnittstellen der zu verwendenden Module nicht bekannt, ist eine Neugenerierung des Moduls erforderlich (Schritt 1006).

Bei einer besonderen Ausprägung des Verfahrens ist aus einem Modul M1-M6 das jeweilige Quellmodul Q1-Q6 temporär ableitbar. Dies bedeutet, dass ein eigenständiges Quellmodul Q1-Q6 nicht permanent vorliegen muß. Es wird bedarfsweise automatisch generiert und es werden aus diesem das Modul M1-M6 selbst erzeugt sowie der Modulzeitstempel TM1-TM6 und ggf. der Schnittstellenzeitstempel TS1-TS6 aktualisiert.

Es ist somit ein optimiertes Verfahren zur Generierung eines Datenverarbeitungsprogramms bereitgestellt, bei dem die Notwendigkeit der Neugenerierung einzelner Module anhand des Vergleichs von Zeitstempeln ermittelt wird. Zu jedem Modul wird ein Modul- und ein Schnittstellenzeitstempel gespeichert, die bei einer Änderung am Modul bzw. an dessen Schnittstelle aktualisiert werden. Ein Modul, das ein geändertes referenziertes Modul verwendet, wird nur dann selbst neu generiert, wenn anhand des Schnittstellenzeitstempels des referenzierten Moduls erkennbar ist, dass sich dessen Schnittstelle geändert hat.

## Patentansprüche

1. Verfahren zur Generierung eines Datenverarbeitungsprogramms (P) aus einer Mehrzahl von Modulen (M1-M6), von denen jedes aus einem Quellmodul (Q1-Q6) generierbar ist und eine Schnittstelle (S1-S6) aufweist,
- wobei zu jedem Quellmodul (Q1-Q6) ein Quellmodulzeitstempel (TQ1-TQ6) und zu jedem Modul (M1-M6) ein Modulzeitstempel (TM1-TM6) sowie zu jeder Schnittstelle (S1-S6) ein Schnittstellenzeitstempel (TS1-TS6) gespeichert wird, der jeweils den Zeitpunkt der letzten Änderung des Quellmoduls (Q1-Q6) und des Moduls (M1-M6) bzw. der Schnittstelle (S1-S6) angibt,
- wobei ein Modul (M1-M6), dessen Modulzeitstempel (TM1-TM6) ungleich dem Quellmodulzeitstempel (TQ1-TQ6) des zugehörigen Quellmoduls (Q1-Q6) ist, aus diesem unter Aktualisierung des Modulzeitstempels (TM1-TM6) und ggf. des Schnittstellenzeitstempels (TS1-TS6) neu generiert wird,
- wobei ein ein referenziertes Modul (M1-M6) verwendendes Modul (M1-M6) neu generiert wird, wenn ein bei dessen vorangehender Generierung zwischengespeicherter Wert des Schnittstellenzeitstempels (TS1'-TS6') des referenzierten Moduls (M1-M6) ungleich dem aktuellen Schnittstellenzeitstempel (TS1-TS6) des referenzierten Moduls (M1-M6) ist, und
- wobei das Datenverarbeitungsprogramm (P) durch Kombination der Module (M1-M6) generiert wird.

2. Verfahren nach Anspruch 1, bei dem die Zwischenspeicherung des Wertes des Schnittstellenzeitstempels (TS1'-TS6') des referenzierten Moduls (M1-M6) in einer Abhängigkeitsliste (AL) erfolgt.

3. Verfahren nach Anspruch 2, bei dem für jedes Modul (M1-M6), welches mindestens ein referenziertes Modul (M1-M6) verwendet, eine eigene Abhängigkeitsliste (AL) vorgesehen ist.

4. Verfahren nach Anspruch 2, bei dem die Abhängigkeitsliste (AL) Bestandteil des Moduls (M1-M6) ist.

5. Verfahren nach einem der Ansprüche 2 bis 4, bei dem die Abhängigkeitsliste (AL) eine der Anzahl der referenzierten Module (M1-M6) entsprechende Anzahl von Positionen (401,402) aufweist, wobei jede Position (401, 402) genau einem referenzierten Modul (M1-M6) zugeordnet ist.

6. Verfahren nach Anspruch 5, bei dem im Anschluss an die Generierung des Moduls (M1-M6) in jede Position (401, 402) der Wert des Schnittstellenzeitstempels (TS1'-TS6') des jeweiligen referenzierten Moduls (M1-M6) eingetragen wird.

7. Verfahren nach einem der Ansprüche 2 bis 6, bei dem die Abhängigkeitsliste (AL) als statisches Feld realisiert ist.

8. Verfahren nach einem der Ansprüche 2 bis 6, bei dem die Abhängigkeitsliste (AL) als verkettete Liste realisiert ist.

9. Verfahren nach einem der Ansprüche 1 bis 8, bei dem im Anschluss an die Generierung eines Moduls (M1-M6) dessen Schnittstellenzeitstempel (TS1-TS6) in eine Abhängigkeitsmatrix (AM) eingetragen wird.

10. Verfahren nach Anspruch 9, bei dem die Abhängigkeitsmatrix (AM) eine der Anzahl der Module (M1-M6) entsprechende Anzahl von Spalten (201, 202, 203) und Zeilen (301, 302, 303) aufweist, wobei jedem Modul (M1-M6) eine Spalte (201, 202, 203) und eine Zeile (301, 302, 303) zugeordnet ist.

11. Verfahren nach Anspruch 10, bei dem jede Zeile (301, 302, 303) der Abhängigkeitsmatrix (AM) die Verwendungs-Beziehungen des zu generierenden Moduls (M1-M6) mit der Eintragung des Wertes des Schnittstellenzeitstempels (TS1'-TS6') des jeweils referenzierten Moduls (M1-M6) in der durch die dem referenzierten Modul zugeordneten Spalte (201, 202, 203) festgelegten Position angibt.

12. Verfahren nach Anspruch 11, bei dem bei der Entscheidung, ob ein Modul (M1-M6) aufgrund der Verwendung eines referenzierten Moduls (M1-M6) neu generiert wird, als aktueller Schnittstellenzeitstempel (TS1-TS6) der Wert des Schnittstellenzeitstempels (TS1'-TS6') der Abhängigkeitsmatrix (AM) aus der Zeile (301, 302, 303) des zu generierenden Moduls (M1-M6) und aus der Spalte (201, 202, 203) des referenzierten Moduls (M1-M6) verwendet wird.

13. Verfahren nach einem der Ansprüche 1 bis 8, bei dem im Anschluss an die Generierung eines Moduls (M1-M6) zusammen mit dem Modul (M1-M6) dessen Schnittstellenzeitstempel (TS1-TS6) gespeichert wird.

14. Verfahren nach Anspruch 13, bei dem bei der Entscheidung, ob ein Modul (M1-M6) aufgrund der Verwendung eines referenzierten Moduls (M1-M6) neu generiert wird, als aktueller Schnittstellenzeitstempel (TS1-TS6) der aus dem referenzierten Modul (M1-M6) ausgelesene Schnittstellenzeitstempel (TS1-TS6) verwendet wird.

15. Verfahren zur Generierung eines zur Generierung eines Datenverarbeitungsprogramms (P) verwendbaren Moduls (M1-M6), das mindestens ein referenziertes Modul (M1-M6) verwendet, wobei jedes Modul (M1-M6) aus einem Quellmodul (Q1-Q6) generierbar ist und eine Schnittstelle (S1-S6) aufweist,
- bei dem zu jedem Quellmodul (Q1-Q6) ein Quellmodulzeitstempel (TQ1-TQ6) und zu jedem Modul (M1-M6) ein Modulzeitstempel (TM1-TM6) sowie zu jeder Schnittstelle (S1-S6) ein Schnittstellenzeitstempel (TS1-TS6) gespeichert wird, der jeweils den Zeitpunkt der letzten Änderung des Quellmoduls (Q1-Q6) bzw. des Moduls (M1-M6) bzw. der Schnittstelle (S1-S6) angibt,
- bei dem ein Modul (M1-M6), dessen Modulzeitstempel (TM1-TM6) ungleich dem Quellmodulzeitstempel (TQ1-TQ6) des zugehörigen Quellmoduls (Q1-Q6) ist, aus diesem unter Aktualisierung des Modulzeitstempels (TM1-TM6) und ggf. des Schnittstellenzeitstempels (TS1-TS6) neu generiert wird, und
- bei dem das ein referenziertes Modul (M1-M6) verwendende Modul (M1-M6) neu generiert wird, wenn ein bei dessen vorangehender Generierung zwischengespeicherter Wert des Schnittstellenzeitstempels (TS1'-TS6') des referenzierten Moduls (M1-M6) ungleich dem aktuellen Schnittstellenzeitstempel (TS1-TS6) des referenzierten Moduls (M1-M6) ist.
